# EUROPÄISCHE PATENTSCHRIFT

(11) **EP 2 448 182 B1**
(45) Veröffentlichungstag und Bekanntmachung des Hinweises auf die Patenterteilung: **04.12.2013**
(21) Anmeldenummer: 10189275.0
(22) Anmeldetag: 28.10.2010
(51) Int. Cl.: H04L 12/46, H04L 29/06

(54) **Verfahren zur Kommunikation in einem Automatisierungssystem**
Method for communicating in an automation system
Procédé de communication dans un système d'automatisation

(43) Veröffentlichungstag der Anmeldung: 02.05.2012
(73) Patentinhaber: Siemens Aktiengesellschaft, 80333 München (DE)
(72) Erfinder: Gerlach, Hendrik, 91058, Erlangen (DE); Köbinger, Franz, 90475, Nürnberg (DE)

(56) Entgegenhaltungen:
- EP-A1- 1 249 747
- EP-A1- 1 496 666
- EP-A1- 1 715 395
- US-A1- 2005 025 069
- US-B1- 7 779 461

## Beschreibung

Die Erfindung betrifft ein Verfahren zur Kommunikation in einem Automatisierungssystem, insbesondere die Kommunikation zwischen abgesetzten Automatisierungsnetzen, die miteinander über ein zentrales Netzwerk mit einem Relais kommunizieren.

Ein Steuerungssystem für die Steuerung von Verfahrensabläufen, sowie ein Verfahren zur Steuerung von Verfahrensabläufen ist aus EP 1 249 747 A1 bekannt. Hierbei werden Signale, welche von dem Steuerungssystem abhängen getunnelt werden, durch TCP/IP-Protokoll-Nachrichten, welche zwischen Feld-Bus-Controllern und einem Server innerhalb eines Netzwerks ausgetauscht werden, wobei die Umwandlung zwischen gerätespezifischen Informationen und OPC-basierten Informationen in einer zentralisierten Art und Weise in einem Server erfolgt.

Automatisierung kann auch in kleineren Anlagen erfolgen, die sich örtlich getrennt von einem zentralen Teil des Automatisierungssystems befinden. Dies können zum Beispiel Klärwerke oder Windkraftanlagen sein. Solche Automatisierungsanlagen werden auch als abgesetzte Automatisierungsanlagen bezeichnet. Die abgesetzten Automatisierungsanlagen werden häufig über Mobilfunk angebunden. Diese Anbindung kann beispielsweise über UMTS oder GPRS erfolgen. Dafür befindet sich zum Beispiel ein Mobilfunkgerät in der Anlage, das dazu ausgebildet ist, mit dem zentralen Teil des Automatisierungssystems zu kommunizieren. Die abgesetzte Anlage kann also aus dem zentralen Teil des Automatisierungssystems gewartet und kontrolliert werden. Die Kommunikation erfolgt üblicherweise über das Internet über gesicherte Virtual Private Network (VPN)-Kanäle.

Ein Verfahren, welches die Weiterleitung von Daten entlang VPN-Tunnels innerhalb eines VPN erlaubt, ist aus US 7,779,461 B1 bekannt. Hierbei werden VPN-Tunnel zu einem Ziel aufgebaut und next-hop Adressen für den VPN-Tunnel bestimmt.

Wenn nun Daten aus einer abgesetzten Anlage in eine zweite abgesetzte Anlage übertragen werden sollen, erfolgt diese Übertragung von der ersten abgesetzten Anlage durch den VPN-Tunnel zum zentralen Teil des Automatisierungssystems. Ein VPN-Gerät des zentralen Teils des Automatisierungssystems terminiert die eingehenden VPN-Verbindungen von den abgesetzten Anlagen. Das VPN-Gerät reicht die entschlüsselten Daten aus dem VPN-Tunnel an ein Vermittlungsgerät weiter. Auf dem Vermittlungsgerät läuft eine Applikation, die die Daten zur zweiten abgesetzten Anlage weiterleitet. Diese Vermittlung erfolgt auf der Applikationsebene (Schicht 7) des OSI-Schichtmodells. Für jedes Applikationsprotokoll ist eine eigene Vermittlungsapplikation nötig. Die Vermittlung erfolgt nicht nur spezifisch erstellt, sondern auch spezifisch konfiguriert werden.

Demgegenüber liegt der Erfindung die Aufgabe zugrunde, ein verbessertes Verfahren zur Kommunikation in einem Automatisierungssystem zu schaffen. Außerdem liegt der Erfindung die Aufgabe zugrunde, ein verbessertes Relais für ein Automatisierungssystem und ein verbessertes Automatisierungssystem zu schaffen.

Die Aufgabe der Erfindung wird durch die unabhängigen Patentansprüche gelöst. Ausführungsformen der Erfindung sind in den abhängigen Patentansprüchen gegeben.

Erfindungsgemäß wird ein Verfahren zur Kommunikation in einem Automatisierungssystem geschaffen. Das Automatisierungssystem umfasst zumindest ein erstes und ein zweites Netzwerk und ein zentrales Relais. Das erste und das zweite Netzwerk können ebenfalls als abgesetzte Anlagen bezeichnet werden. Das Relais befindet sich vorzugsweise in einem zentralen Bereich des Automatisierungssystems. Das erste und das zweite Netzwerk sind also vorzugsweise räumlich getrennt vom zentralen Relais. Es ist auch möglich, dass sich das erste und das zweite Netzwerk nicht räumlich getrennt vom zentralen Relais befinden. Das erste und das zweite Netzwerk umfassen jeweils zumindest ein Netzwerkgerät und jeweils zumindest ein Zugangsgerät zu dem jeweiligen Netzwerk. Der Zugangsgateway ermöglicht die Kommunikation des jeweiligen Netzwerks mit dem Relais im zentralen Bereich des Automatisierungssystems. Der Zugangsgateway kann beispielsweise ein Mobilfunkgerät umfassen, worüber eine Datenverbindung mit dem zentralen Relais aufgebaut werden kann. Alternativ oder zusätzlich kann der Zugangsgateway auch über eine drahtgebundene Leitung mit dem zentralen Relais verbunden sein. Dies kann beispielsweise eine DSL-, eine Kabel- oder eine Telefonverbindung sein.

Es wird eine Datenverbindung zwischen dem Zugangsgateway des ersten Netzwerks mit dem zentralen Relais und zwischen dem Zugangsgateway des zweiten Netzwerks mit dem zentralen Relais hergestellt. Die Datenverbindungen basieren jeweils auf dem IP-Protokoll.

Es wird ein erster Virtual Private Network (VPN)-Tunnel zwischen dem Zugangsgateway des ersten Netzwerks und dem Relais und ein zweiter VPN-Tunnel zwischen dem Zugangsgateway des zweiten Netzwerks und dem Relais hergestellt.

Die Datenverbindung und die VPN-Tunnel werden jeweils von den Zugangsgateways hergestellt. Die Netzwerkschichtadresse, z.B. eine IP-Adresse, des zentralen Relais oder eine äquivalente Information wie ein DNS-Name ist hierfür in beiden Zugangsgateways gespeichert oder kann von den Zugangsgateways z.B. durch eine DNS-Auflösung bestimmt werden.. Es werden also Datenverbindungen zwischen den Zugangsgateways und dem Relais und VPN-Tunnels zwischen den Zugangsgateways und dem Relais unabhängig von der aktuellen Netzwerkschichtadresse des Zugangsgateways hergestellt. Die Zugangsgateways können demnach über dynamische Netzwerkschichtadressen, z.B. IP-Adressen, verfügen. Durch die Verbindung über die VPN-Tunnel ist es ebenfalls unerheblich, ob sich im Übertragungsweg zwischen dem jeweiligen Zugangsgateway und dem zentralen Relais zumindest eine Firewall, zumindest ein Router und/oder zumindest ein NAT-Gerät, beispielsweise eines Mobilfunkanbieters, befindet.

Wenn nun eine Datenübertragung von einem ersten Netzwerkgerät des ersten Netzwerks zu einem zweiten Netzwerkgerät des zweiten Netzwerks stattfinden soll, wird das Signal von dem ersten Netzwerkgerät des ersten Netzwerks über die Zugangsgateway des ersten Netzwerks durch den ersten VPN-Tunnel zum zentralen Relais übermittelt. Im zentralen Relais wird das Signal vom ersten VPN-Tunnel zum zweiten VPN-Tunnel geroutet. Dann wird das Signal vom Relais durch den zweiten VPN-Tunnel über den Zugangsgateway des zweiten Netzwerks zum zweiten Netzwerkgerät des zweiten Netzwerks übermittelt.

Die Vermittlung wird also genauso wie das Terminieren der VPN-Verbindungen durch das zentrale Relais durchgeführt. Das Routing erfolgt vorzugsweise in der Vermittlungsschicht des OSI-Schichtmodells. Das Routing ist also unabhängig von den verwendeten Applikationsprotokollen.

Ein Automatisierungssystem kann z.B. als industrielles Automatisierungssystem ausgebildet sein. Solche industriellen Automatisierungssysteme können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungssysteme bzw. industrielle Automatisierungssysteme Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungssystem bzw. industriellen Automatisierungssystem vorgesehen sein, z.B. zum Überwachen, Einrichten, Umprogrammieren oder/oder Umparametrieren einer oder mehrerer Steuerungseinheiten im Automatisierungssystem.

Ein Automatisierungssystem kann z.B. drahtgebundene Kommunikationskomponenten und/oder drahtlose Kommunikationskomponenten umfassen. Außerdem kann ein Automatisierungssystem zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungssystem umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Einund/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der SIMATIC-S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Es ist zu beachten, dass das Verfahren nach Ausführungsformen der Erfindung nicht auf ein Automatisierungssystem beschränkt ist, sondern auch für andere Systeme mit zumindest einem ersten und einem zweiten Netzwerk verwendet werden kann.

Nach Ausführungsformen der Erfindung ist das Routing des Signals ein IP-Routing.

Nach Ausführungsformen der Erfindung wird die Berechtigung des ersten Netzwerkgeräts zur Kommunikation mit dem Relais überprüft. Außerdem wird die Berechtigung des ersten Netzwerkgeräts zur Kommunikation mit dem zweiten Netzwerkgerät überprüft. Wenn das erste Netzwerkgerät nicht zur Kommunikation mit dem Relais und/oder dem zweiten Netzwerkgerät berechtigt ist, werden das Routing des Signals und die Übermittlung des Signals zum zweiten Netzwerkgerät verhindert. Die Überprüfungen der jeweiligen Berechtigungen des ersten Netzwerkgeräts finden ebenfalls in dem zentralen Relais statt. Hierzu kann beispielsweise am Endpunkt des VPN-Tunnels eine sogenannte Tunnel-Policy angewendet werden. Hier kann beispielsweise überprüft werden, ob im Allgemeinen alle Netzwerkgeräte des ersten Netzwerks zur Kommunikation mit den Netzwerkgeräten des zweiten Netzwerks berechtigt sind. Alternativ oder zusätzlich kann überprüft werden, welche Zugangsgateways des ersten und/oder zweiten Netzwerks berechtigt sind, einen VPN-Tunnel zum zentralen Relais aufzubauen. Dies kann beispielsweise mit Zertifikaten oder preshared keys erfolgen.

Zusätzlich oder alternativ kann in dem zentralen Relais auch eine sogenannte Zugriffs-Policy umgesetzt sein. Dies bedeutet, dass geprüft wird, ob das erste Netzwerkgerät im ersten Netzwerk zur Kommunikation mit einem Netzwerkgerät im zweiten Netzwerk oder auch zur Kommunikation mit dem zentralen Relais berechtigt ist. Dies kann beispielsweise durch Überprüfung der Netzwerkschichtadresse des ersten Netzwerkgeräts erfolgen.

Die Überprüfungen der jeweiligen Berechtigungen ist vorteilhaft, wenn der Datenverkehr über den jeweiligen VPN-Tunnel eingeschränkt werden soll. Dies kann beispielsweise durch eine dem VPN Terminierungspunkt nachgeschaltete Firewall im Zugangsgateway und/oder im zentralen Relais erfolgen.

Nach Ausführungsformen der Erfindung erfolgt die Herstellung zumindest einer der beiden Datenverbindungen vom ersten Netzwerk zum Relais und vom zweiten Netzwerk zum Relais durch den jeweiligen Zugangsgateway. Der jeweilige Zugangsgateway initiiert also die Herstellung der beiden Datenverbindungen.

Nach Ausführungsformen der Erfindung werden die Herstellung der Datenverbindung vom zweiten Netzwerk zum zentralen Relais und die Herstellung des zweiten VPN-Tunnels durch eine Signalisierung über einen Datenkanal von dem ersten Netzwerkgerät des ersten Netzwerks zu dem zweiten Netzwerkgerät des zweiten Netzwerks initiiert. Falls also das erste Netzwerkgerät eine Datenverbindung mit dem zweiten Netzwerkgerät herstellen will, das zweite Netzwerkgerät aber noch keine Verbindung zum zentralen Relais hergestellt hat, kann das erste Netzwerkgerät durch eine Signalisierung die Herstellung der Verbindung vom Zugangsgateway des zweiten Netzwerks zum zentralen Relais initiieren. Dies kann vorteilhaft sein, wenn beispielsweise das erste Netzwerkgerät mit dem zweiten Netzwerkgerät kommunizieren will, obwohl das zweite Gerät keine Verbindung zum zentralen Relais hat. Die Signalisierung kann beispielsweise über ein Mobilfunknetzwerk erfolgen.

Nach Ausführungsformen der Erfindung ist die Signalisierung eine über eine Mobilfunkverbindung übermittelte Textnachricht oder ein Anruf. Die Textnachricht kann beispielsweise eine gegen Missbrauch gesicherte SMS sein. Die Sicherung gegen Missbrauch kann beispielsweise durch eine sichere Übertragung, Verschlüsselung und/oder Signierung erfolgen.

Nach Ausführungsformen der Erfindung findet das Routing in der Vermittlungsschicht des OSI-Schichtmodells statt.

Nach der Erfindung erfolgt ein Loggen übermittelter Signale durch das Relais.

Nach der Erfindung wird ein Benutzer des ersten Netzwerkgeräts im ersten Netzwerk mit Authentifizierungsdaten authentifiziert. Die Authentifizierungsdaten können beispielsweise ein Benutzername und ein Passwort sein. Die Authentifizierungsdaten werden vor dem Signal vom Zugangsgateway des ersten Netzwerks zum zentralen Relais übermittelt. Die Berechtigung des Benutzers zur Kommunikation mit dem zweiten Netzwerkgerät im zweiten Netzwerk wird anhand von Policy-Daten überprüft. Es findet also eine Prüfung der Berechtigung des Benutzers statt. Außerdem wird die Berechtigung des Benutzers zur Kommunikation mit dem zweiten Netzwerkgerät im zweiten Netzwerk anhand der Zugriffspolicy überprüft. Die Überprüfung der Berechtigung des Benutzers kann an den gleichen Stellen in dem zentralen Relais erfolgen wie die oben beschriebene Überprüfung der Berechtigung des ersten Netzwerkgeräts. Die Authentifizierung eines Benutzers mit den Authentifizierungsdaten kann im Enforcementpoint für die Zugriffspolicy in dem zentralen Relais erfolgen.

Jedem Benutzer kann nach erfolgter Authentifizierung ein eigener Satz von Zugriffspolicy-Regeln zugeordnet werden, der seine Zugriffsrechte regelt und einen Teil der gesamten Zugriffs-Policy darstellt. Dies kann beispielsweise durch eine dem VPN Terminierungspunkt nachgeschaltete Firewall im Zugangsgateway erfolgen.

Mit anderen Worten erfolgt die Benutzerauthentifizierung im zentralen Relais. Nach erfolgreicher Benutzerauthentifizierung wird dem vom Benutzer benutzten Netzwerkgerät eine Zugriffs-Policy zugeordnet, die eine Kommunikation dieses Netzwerkgeräts mit anderen Netzwerkgeräten im Automatisierungssystem erlaubt und/oder verbieten. Die diesem Netzwerkgerät zugeordnete Zugriffs-Policy ist auf den authentifizierten Benutzer abgestimmt.

Nach einer erfolgreichen Benutzerauthentifizierung wird also für das erste Netzwerkgerät eine Berechtigung zur Kommunikation mit dem zweiten Netzwerkgerät eingerichtet.

Außerdem können Authentifizierungsdaten zur Geräteauthentifizierung der Zugangsgateways dienen. Authentifizierungsdaten für eine Geräteauthentifizierung der Zugangsgateways können beispielsweise Zertifikate oder preshared keys sein.

Die Netzwerkgeräte werden bei der der Überprüfung der Tunnelund der Zugangspolicies anhand ihrer Netwerkschichtadressen identifiziert.

In einem weiteren Aspekt betrifft die Erfindung ein Relais für ein Automatisierungssystem. Das Relais umfasst Mittel zur Kommunikation mit dem Zugangsgateway des ersten Netzwerks und mit dem Zugangsgateway des zweiten Netzwerks. Diese Mittel können beispielsweise eine Schnittstelle sein, mit der das Zugangsgateway über eine Mobilfunkverbindung oder ein Telefonverbindung oder eine Internetverbindung kommunizieren kann. Außerdem umfasst das Relais Mittel zur Herstellung eines VPN-Tunnels zwischen dem Zugangsgateway des ersten Netzwerks und dem Relais und eines zweiten VPN-Tunnels zwischen dem Zugangsgateway des zweiten Netzwerks und dem Relais. Diese Mittel können beispielsweise ein Prozessor sein, der ein Programm ausführt, das den Prozessor zur Terminierung der eingehenden VPN-Verbindungen der Zugangsgateways der beiden Netzwerke veranlasst.

Außerdem weist das Relais Mittel zum Empfang eines gesicherten Signals von einem ersten Netzwerkteilnehmer in dem ersten Netzwerk über den Zugangsgateway des ersten Netzwerks durch den ersten VPN-Tunnel auf. Das Signal des ersten Netzwerkgeräts kann beispielsweise ebenfalls über die Schnittstelle des Zugangsgateways empfangen werden.

Das Relais umfasst ferner Mittel zum Routing des Signals. Das Routing kann beispielsweise durch den Prozessor durchgeführt werden und findet bevorzugter Weise auf der Vermittlungsschicht des OSI-Schichtmodells statt. Außerdem umfasst das Relais Mittel zur durch den VPN-Tunnel gesicherten Übermittlung des Signals vom Relais durch den zweiten VPN-Tunnel über den Zugangsgateway des zweiten Netzwerks zum zweiten Netzwerkgerät des zweiten Netzwerks. Das Signal kann beispielsweise durch den Prozessor über die Schnittstelle des Relais übermittelt werden.

In noch einem weiteren Aspekt betrifft die Erfindung ein Automatisierungssystem mit einem zentralen Relais nach Ausführungsformen der Erfindung.

Im Nachfolgenden werden Ausführungsformen der Erfindung anhand der Figuren näher erläutert. Es zeigen:
- Figur 1: eine schematische Darstellung eines Automatisierungssystems mit zwei Netzwerken mit jeweils einem Zugangsgateway und einem zentralen Bereich des Automatisierungssystems mit einem zentralen Relais;
- Figur 2: ein Blockdiagramm eines Automatisierungssystems mit zwei Netzwerken und einem zentralen Relais; und
- Figur 3: ein Flussdiagramm eines Verfahrens nach Ausführungsformen der Erfindung.

Elemente der nachfolgenden Figuren, die einander entsprechen, sind mit denselben Bezugszeichen gekennzeichnet.

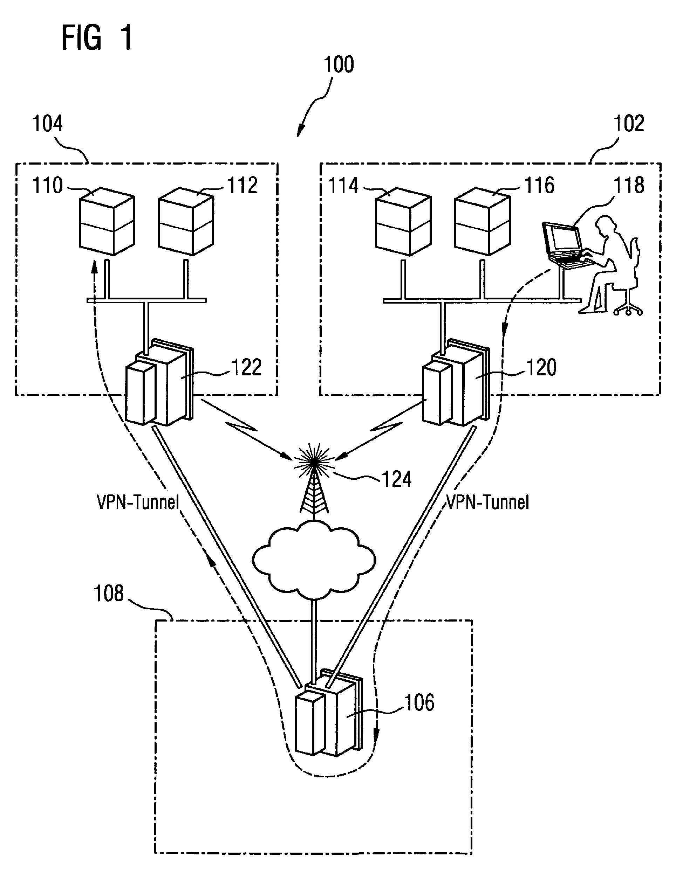

Figur 1 ist eine schematische Darstellung eines Automatisierungssystems 100 mit einem ersten Netzwerk 102 und einem zweiten Netzwerk 104. In einem zentralen Bereich 108 des Automatisierungssystems 100 befindet sich ein zentrales Relais 106. Das erste Netzwerk 102 umfasst ein erstes Netzwerkgerät 114, ein zweites Netzwerkgerät 116 und ein drittes Netzwerkgerät 118. Das zweite Netzwerk 104 umfasst ein erstes Netzwerkgerät 110 und ein zweites Netzwerkgerät 112. Es ist zu beachten, dass sowohl das erste Netzwerk als auch das zweite Netzwerk mehr oder weniger Netzwerkgeräte als hier dargestellt umfassen können.

Außerdem umfasst das erste Netzwerk 102 ein erstes Zugangsgateway 120 und das zweite Netzwerk 104 ein zweites Zugangsgateway 122.

Die Netzwerkgeräte 110 - 118 können beispielsweise Automatisierungseinrichtungen wie zum Beispiel speicherprogrammierbare Steuerungen sein. Das Netzwerkgerät 118 ist beispielsweise ein Computer, der sich ebenfalls im ersten Netzwerk 102 befindet.

Die beiden Zugangsgateways 120 und 122 stellen über einen Zugangspunkt 124 eines Mobilfunknetzwerks eine Verbindung zum zentralen Relais 106 her. Die Verbindung kann alternativ auch über eine kabelgebundene Verbindung wie zum Beispiel eine Telefonverbindung erfolgen. Wenn die Verbindung zwischen den Zugangsgateways 120 und 122 mit dem zentralen Relais 106 hergestellt ist, stellen die Zugangsgateways 120 und 122 einen VPN-Tunnel zwischen dem jeweiligen Zugangsgateway und dem zentralen Relais 106 her. Es besteht also eine Verbindung zwischen dem Zugangsgateway 120 des ersten Netzwerks 102 und dem zentralen Relais 106 und eine Verbindung zwischen dem Zugangsgateway 122 des zweiten Netzwerks 104 mit dem zentralen Relais 106. Außerdem besteht ein VPN-Tunnel zwischen dem Zugangsgateway 120 des ersten Netzwerks 102 und dem zentralen Relais 106 und ein weiterer VPN-Tunnel zwischen dem Zugangsgateway 122 des zweiten Netzwerks 104 mit dem zentralen Relais 106.

Wenn nun beispielsweise das dritte Netzwerkgerät 118 des ersten Netzwerks 102 ein Signal an das erste Netzwerkgerät 110 des zweiten Netzwerks 104 übermitteln möchte, wird dieses Signal zunächst vom dritten Netzwerkgerät 118 des ersten Netzwerks 102 an den Zugangsgateway 120 des ersten Netzwerks 102 übermittelt. Der Zugangsgateway 120 übermittelt das Signal dann über den VPN-Tunnel zum zentralen Relais 106. Im zentralen Relais 106 wird das Signal in der Vermittlungsschicht des OSI-Schichtmodells geroutet und durch den VPN-Tunnel an das Zugangsgateway 122 des zweiten Netzwerks 104 übermittelt. Der Zugangsgateway 122 des zweiten Netzwerks 104 übermittelt das Signal dann weiter zum ersten Netzwerkgerät 110 des zweiten Netzwerks 104. Es ist also eine Signalübermittlung von jedem Netzwerkgerät des ersten Netzwerks 102 zu jedem Netzwerkgerät des zweiten Netzwerks 104 und umgekehrt möglich. Die Signalübertragung erfolgt dabei jeweils über die VPN-Tunnel, die zwischen den Zugangsgateways 120 und 122 und dem zentralen Relais 106 sind. Das Routing des Signals findet im zentralen Relais 106 auf der Vermittlungsschicht des OSI-Schichtmodells statt, sodass die Vermittlung unabhängig von einem Applikationsprotokoll stattfindet.

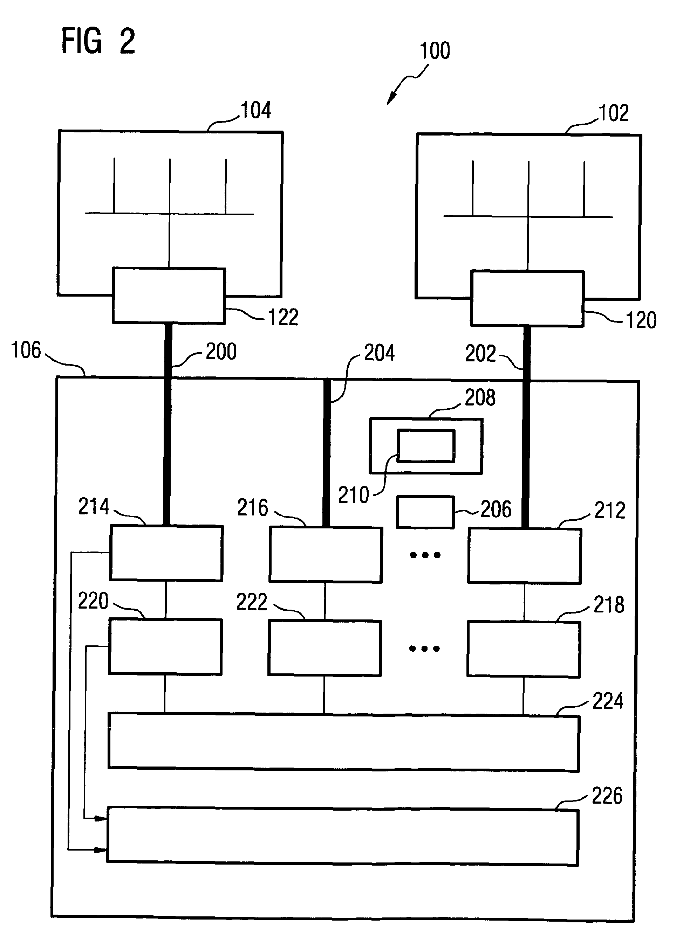

Figur 2 ist ein Blockdiagramm des Automatisierungssystems 100 mit dem ersten Netzwerk 102 und dem zweiten Netzwerk 104. Dargestellt ist außerdem das zentrale Relais 106. Im ersten Netzwerk 102 befindet sich Zugangsgateway 120 und im zweiten Netzwerk 104 Zugangsgateway 122. Die Gateways 120 und 122 sind jeweils zur Herstellung einer Verbindung und eines VPN-Tunnels mit dem zentralen Relais 106 ausgebildet. Zugangsgateway 120 stellt VPN-Tunnel 202 zum zentralen Relais her und Zugangsgateway 122 VPN-Tunnel 200. Das Automatisierungssystem 100 kann auch mehr Netzwerke als das erste Netzwerk 102 und das zweite Netzwerk 104 umfassen. Hierfür umfasst das zentrale Relais 106 Mittel für die Herstellung zumindest eines weiteren VPN-Tunnels 204.

Das zentrale Relais 106 umfasst außerdem einen Prozessor 206 und einen Datenspeicher 208. Ein Programm 210 im Datenspeicher 208 ist dazu ausgebildet, den Prozessor 206 zur Kommunikation mit den Zugangsgateways, zur Herstellung der VPN-Tunnels, zum Empfang von Signalen der Netzwerkgeräte, zum Routing der Signale und zur Übermittlung der Signale zu veranlassen.

Beim Empfang von einem Signal eines Netzwerkgeräts des ersten Netzwerks 102 über den Zugangsgateway 120 durch den VPN-Tunnel 202 wird die Berechtigung des Netzwerkgeräts zur Kommunikation mit dem zentralen Relais am Tunnelendpunkt 212 überprüft. Die Überprüfung kann beispielsweise durch den Prozessor 206 stattfinden. Hier kann auch die Überprüfung von Benutzer-Authentifizierungsdaten stattfinden. Mit den Authentifizierungsdaten eines Benutzers kann überprüft werden, ob der Benutzer zur Kommunikation mit dem zentralen Relais 106 berechtigt ist.

Eine Benutzerauthentifizierung kann beispielsweise folgendermaßen ablaufen. Zunächst wird der Tunnel 202 aufgebaut. Hier wird überprüft, ob der Aufbau eines VPN-Tunnls zum Relais zugelassen ist. Dazu werden Zertifikate oder Preshared Keys geprüft.

Anschließend wird die Kommunikation im Tunnel überprüft. Dies betrifft den Daten- oder Signalaustausch zwischen einem Netzwerkgerät des ersten Netzwerks 102 und einem Netzwerkgerät des zweiten Netzwerks 104. Es ist zu beachten, dass die Tunnel schon aufgebaut sind. Eine Tunnelpolicy regelt, welche Netzwerkschichtadressen, z.B. IP-Adressen, und/oder welche Subnetze mit welchen anderen Netzwerkschichtadressen und/oder Subnetzen Signal austauschen können. Es kann also beispielsweise festgelegt werden, dass das erste Netzwerk 102 mit dem zweiten Netzwerk 104 Signale austauschen kann. Es kann auch festgelegt werden, dass das erste Netzwerk 102 nicht mit einem dritten Netzwerk (hier nicht dargestellt) Signale austauschen kann.

An den Policy-Enforcement-Points 218-222 können dann Benutzerauthentifizierungsdaten überprüft werden. Auf Basis dieser Benutzerauthentifizierung werden für das jeweilige Netzwerkgerät Zugriffsberechtigungen festgelegt. Mit anderen Worten wird bei erfolgreicher Benutzerauthentifizierung für das Netzwerkgerät, mit dem sich der Benutzer authentifiziert hat, Zugriffsberechtigungen festgelegt, die für diesen Benutzer gelten. Beispielsweise ist ein Netzwerkgerät des ersten Netzwerks nicht zum Signalaustausch mit dem zweiten Netzwerk berechtigt. Nach erfolgreicher Benutzerauthentifizierung kann festgelegt sein, dass dieses Netzwerkgerät nun zum Signalaustausch mit dem zweiten Netzwerk berechtigt ist. Die Berechtigung wird also für die Netwerkschicht-Quelladresse festgelegt.

Auch der VPN-Tunnel 200 verfügt über einen Tunnelendpunkt 214. Hier wird ebenfalls überprüft, ob ein Netzwerkgerät des zweiten Netzwerks 104 zur Kommunikation mit dem zentralen Relais 106 berechtigt ist. Das zentrale Relais 106 umfasst für jeden VPN-Tunnel einen Tunnelendpunkt. Für den VPN-Tunnel 204 ist dies beispielsweise Tunnelendpunkt 216.

An jedem Tunnelendpunkt 212-216 befindet sich auch ein Enforcementpoint für die jeweilige Tunnel-Policy.

Im Anschluss an die Tunnelendpunkte 212 - 216 kann eine weitere Berechtigungsüberprüfung stattfinden. Hier können weitere Zugriffs-Policies umgesetzt werden, wie zum Beispiel eine Überprüfung der Berechtigung des Netzwerkgeräts, das die Signalübertragung initiiert hat, zur Kommunikation mit dem Signalziel-Netzwerkgerät. Diese weiteren Überprüfungen finden für den VPN-Tunnel 202 am Policy Enforcement Point 218, für VPN-Tunnel 200 am Policy Enforcement Point 220 und für den potenziellen VPN-Tunnel 204 am Policy Enforcement Point 222 statt.

Im zentralen Relais 106 findet außerdem ein Routing 224 des Signals statt. Das Routing findet in der Vermittlungsschicht des OSI-Schichtmodells statt. Dies ist vorteilhaft, da so das Signal unabhängig von der Applikation, die das Signal übertragen hat, geroutet werden. Das Routing kann beispielsweise von einem ersten Netzwerkgerät des ersten Netzwerks 102 zu einem zweiten Netzwerkgerät des zweiten Netzwerks 104 geschehen. Nach dem Routing wird das Signal, das über den ersten VPN-Tunnel 202 empfangen wurden, über den zweiten VPN-Tunnel 200 an den Zugangsgateway 122 des zweiten Netzwerks 104 übertragen. Der Zugangsgateway 122 des zweiten Netzwerks 104 übermittelt das Signal dann weiter an das zweite Netzwerkgerät des zweiten Netzwerks 104.

Außerdem verfügt das zentrale Relais 106 über eine Logging-Komponente 226. Die Logging-Komponente 226 ist dazu ausgebildet, die übertragenen Signale zu loggen. Alternativ oder zusätzlich können auch nur Informationen der Tunnelendpunkte und der Enforcement-Points über die übertragenen Signale geloggt werden. Dies können beispielsweise Informationen darüber sein, wann ein Signal von wo nach wo weitergeleitet wurde und/oder wann ein Signal nicht weitergeleitet wurde und warum. Dies können zum Beispiel beim Tunnelendpunkt 212 Informationen darüber sein, wann versucht wurde einen Tunnel aufzubauen und ob der Versuch erfolgreich war, wann und warum der Tunnel abgebaut wurde, wieviel Daten über den Tunnel übertragen wurden und/oder welche Verschlüsselungsstärke der Tunnel hat. Für den Policy Enforcement Point 218 können dies beispielsweise Informationen darüber sein, welcher Benutzer wann und von wo erfolgreich authentifiziert wurde, welcher Benutzer nicht erfolgreich authentifiziert wurde und/oder welche Zugriffe erlaubt oder nicht erlaubt wurden.

Dies kann vorteilhaft sein, um Signalübertragungen, einen Tunnelaufbau und /oder auch die Aktionen der Policy Enforcement Points nachvollziehen zu können. Es kann also jede Signalübertragung, jeder Tunnelaufbau bzw. -Versuch und jede Aktion in Policy-Enforcemen Points innerhalb des zentralen Relais mitgeloggt werden. Aus Gründen der Übersichtlichkeit sind in Figur 2 nur Verbindungen vom Tunnelendpunkt 214 und vom Policy Enforcement Point 220 zur Logging-Komponente 226 eingezeichnet. Die gleichen Verbindungen bestehen auch von den Tunnelendpunkten 216 und 212 und von den Policy Enforcement Points 218 und 222 zur Logging-Komponente.

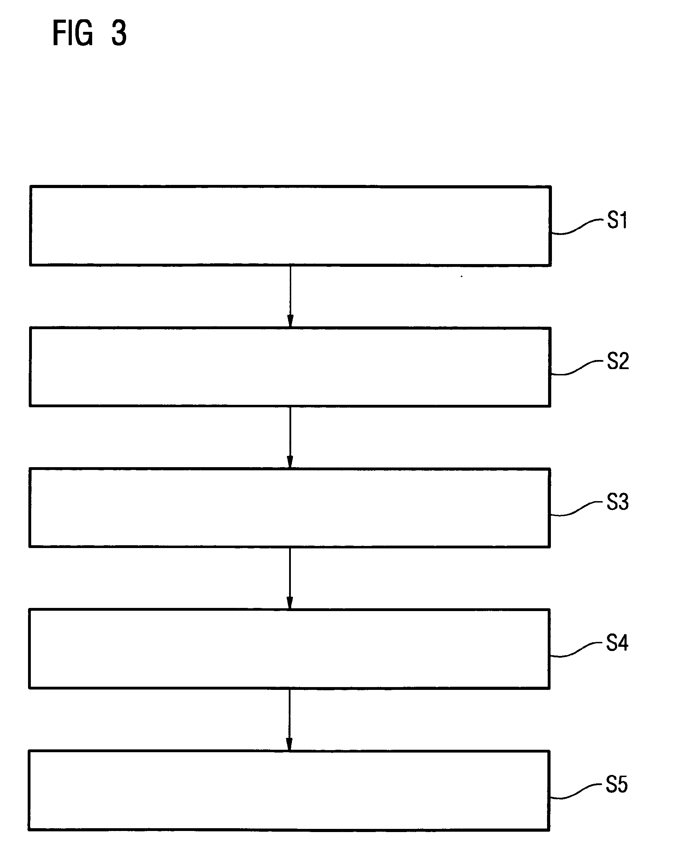

Figur 3 ist ein Flussdiagramm eines Verfahrens nach Ausführungsformen der Erfindung. In einem ersten Schritt S1 wird eine Datenverbindung zwischen dem Zugangsgateway des ersten Netzwerks und dem zentralen Relais hergestellt. Außerdem umfasst Schritt S1 die Herstellung einer Datenverbindung zwischen dem Zugangsgateway des zweiten Netzwerks und dem zentralen Relais. Dann wird ein erster VPN-Tunnel zwischen dem Zugangsgateway des ersten Netzwerks und dem Relais in Schritt S2 hergestellt. Außerdem wird in Schritt S2 ein zweiter VPN-Tunnel zwischen dem Zugangsgateway des zweiten Netzwerks und dem Relais hergestellt.

In Schritt S3 wird ein Signal von einem ersten Netzwerkgerät des ersten Netzwerks über den Zugangsgateway des ersten Netzwerks durch den ersten VPN-Tunnel zum zentralen Relais übermittelt. In Schritt S4 wird das Signal innerhalb des zentralen Relais vom ersten VPN-Tunnel zum zweiten VPN-Tunnel geroutet. Dann wird das Signal in Schritt S5 vom Relais durch den zweiten VPN-Tunnel über den Zugangsgateway des zweiten Netzwerks zu einem zweiten Netzwerkgerät des zweiten Netzwerks übertragen.

### Bezugszeichenliste

- 100: Automatisierungssystem
- 102: erstes Netzwerk
- 104: zweites Netzwerk
- 106: zentrales Relais
- 108: zentraler Bereich
- 110: erstes Netzwerkgerät (im zweiten Netzwerk)
- 112: zweites Netzwerkgerät (im zweiten Netzwerk)
- 114: erstes Netzwerkgerät (im ersten Netzwerk)
- 116: zweites Netzwerkgerät(im ersten Netzwerk)
- 118: drittes Netzwerkgerät (im ersten Netzwerk)
- 120: Zugangsgateway (des ersten Nettwerkes)
- 122: Zugangsgateway (des zweiten Netzwerkes)
- 124: Zugangspunkt
- 200: VPN-Tunnel
- 202: VPN-Tunnel
- 204: VPN-Tunnel
- 206: Prozessor
- 208: Datenspeicher
- 210: Programm
- 212: Tunnelendpunkt mit Tunnel-Policy Enforcementpoint
- 214: Tunnelendpunkt mit Tunnel-Policy Enforcementpoint
- 216: Tunnelendpunkt mit Tunnel-Policy Enforcementpoint
- 218: Policy Enforcement Point für Zugriffspolicy
- 220: Policy Enforcement Point für Zugriffspolicy
- 222: Policy Enforcement Point für Zugriffspolicy
- 224: Routing
- 226: Logging

## Patentansprüche

1. Verfahren zur Kommunikation in einem Automatisierungssystem (100), wobei das Automatisierungssystem zumindest ein erstes (102) und ein zweites Netzwerk (104) und ein zentrales Relais (106) umfasst, wobei das erste und das zweite Netzwerk jeweils zumindest ein Netzwerkgerät (110; 112; 114; 116; 118)) und jeweils zumindest einen Zugangsgateway (120; 122) zu dem jeweiligen Netzwerk umfassen, wobei das Verfahren die folgenden Schritte umfasst:
- Herstellung (S1) jeweils einer Datenverbindung zwischen dem Zugangsgateway des ersten Netzwerks mit dem zentralen Relais und zwischen dem Zugangsgateway des zweiten Netzwerk mit dem zentralen Relais, wobei die Datenverbindung auf dem IP-Protokoll basiert,
- Herstellung (S2) eines ersten Virtual Private Network Tunnels (202) zwischen dem Zugangsgateway des ersten Netzwerks und dem Relais und eines zweiten Virtual Private Network Tunnels (200) zwischen dem Zugangsgateway des zweiten Netzwerk und dem Relais,
- loggen übermittelter Signale durch das Relais,
- Authentifizierung eines Benutzers des ersten Netzwerkgeräts mit Authentifizierungsdaten,
- Übermittlung (S3) von einem Signal von einem ersten Netzwerkgerät des ersten Netzwerks über den Zugangsgateway des ersten Netzwerks durch den ersten Virtual Private Network Tunnel zum zentralen Relais,
- Routing (S4; 224) des Signals innerhalb des zentralen Relais vom ersten Virtual Private Network Tunnel zum zweiten Virtual Private Network Tunnel,
- Übermittlung (S5) des Signals vom Relais durch den zweiten Virtual Private Network Tunnel über den Zugangsgateway des zweiten Netzwerks zu einem zweiten Netzwerkgerät des zweiten Netzwerks.

2. Verfahren nach Anspruch 1, wobei das Routing des Signals ein IP-Routing des Signals ist.

3. Verfahren nach einem der vorhergehenden Ansprüche, wobei das Verfahren ferner die folgenden Schritte umfasst:
- Überprüfung der Berechtigung des ersten Netzwerkgeräts zur Kommunikation mit dem Relais,
- Überprüfung der Berechtigung des ersten Netzwerkgeräts zur Kommunikation mit dem zweiten Netzwerkgerät,
- Verhinderung des Routings des Signals und der Übermittlung des Signals zum zweiten Netzwerkgerät, wenn das erste Netzwerkgerät nicht zur Kommunikation mit dem Relais und/oder dem zweiten Netzwerkgerät berechtigt ist.

4. Verfahren nach einem der vorhergehenden Ansprüche, wobei die Herstellung zumindest einer der beiden Datenverbindungen vom ersten Netzwerk zum Relais und vom zweiten Netzwerk zum Relais durch das jeweilige Zugangsgateway erfolgt.

5. Verfahren nach einem der vorhergehenden Ansprüche, wobei die Herstellung des ersten und des zweiten Virtual Private Network Tunnels durch das jeweilige Zugangsgateway initiiert wird.

6. Verfahren nach einem der vorhergehenden Ansprüche, wobei die Herstellung der Datenverbindung vom zweiten Netzwerk zum zentralen Relais und die Herstellung des zweiten Virtual Private Network Tunnels durch eine Signalisierung über einen Datenkanal von dem ersten Netzwerkgerät des ersten Netzwerks zu dem zweiten Netzwerkgerät des zweiten Netzwerks oder durch eine Signalisierung über einen Datenkanal von dem ersten Zugangsgateway zum zweiten Zugangsgateway initiiert wird.

7. Verfahren nach Anspruch 6, wobei die Signalisierung eine über eine Mobilfunkverbindung übermittelte Textnachricht oder ein Anruf ist.

8. Verfahren nach einem der vorhergehenden Ansprüche, wobei das Routing in einer Vermittlungsschicht stattfindet.

9. Verfahren nach einem der vorhergehenden Ansprüche, wobei das Verfahren ferner die folgenden Schritte umfasst:
- Überprüfung der Berechtigung des Benutzers zur Kommunikation mit dem zweiten Netzwerkgerät anhand der Authentifizierungsdaten, und
- Einrichtung einer Berechtigung des ersten Netzwerkgeräts zur Kommunikation mit dem zweiten Netzwerkgerät.

10. Relais (106) für ein Automatisierungssystem, wobei das Relais
- Mittel (206) zur Kommunikation mit einem Zugangsgateway des ersten Netzwerks und mit einem Zugangsgateway des zweiten Netzwerks, wobei die Kommunikation auf dem IP-Protokoll basiert,
- Mittel (212; 216; 214) zur Herstellung eines ersten Virtual Private Network Tunnels zwischen dem Zugangsgateway eines ersten Netzwerks und dem Relais und des zweiten Virtual Private Network Tunnels zwischen dem Zugangsgateway des zweiten Netzwerks und dem Relais,
- Mittel (212) zum Empfang eines Signals von einem ersten Netzwerkgerät in dem ersten Netzwerk über das Zugangsgateway des ersten Netzwerks durch den ersten Virtual Private Network Tunnel,
- Mittel (224) zum Routing des Signals, und
- Mittel (214 zur Übermittlung des Signals vom Relais durch den zweiten Virtual Private Network Tunnel über den Zugangsgateway des zweiten Netzwerks zu einem Netzwerkgerät des zweiten Netzwerks,
- Mittel zum Loggen (226) der übermittelten Signale,
- Mittel zur Authentifizierung eines Benutzers des ersten Netzwerkgerätes mit Authentifizierungsdaten
umfasst.

11. Relais nach Anspruch 10, wobei das Relais dazu ausgebildet ist, ein Verfahren nach einem der Ansprüche 1-9 durchzuführen.

12. Automatisierungssystemm (100) mit zumindest einem ersten (102) und einem zweiten Netzwerk (104) und einem Relais (106) nach einem der Ansprüche 10 oder 11, wobei das erste und das zweite Netzwerk jeweils zumindest ein Netzwerkgerät und jeweils zumindest ein Zugangsgateway (120; 122) umfassen.

13. Automatisierungssystem nach Anspruch 12, wobei das Automatisierungssystem dazu ausgebildet ist, ein Verfahren nach einem der Ansprüche 1-9 durchzuführen.

## Claims

1. Method for communicating in an automation system (100), the automation system comprising at least one first network (102) and one second network (104) and a central relay (106), the first and second networks each comprising at least one network device (110; 112; 114; 116; 118) and at least one access gateway (120; 122) to the respective network, the method comprising the following steps of:
- establishing (S1) a respective data connection between the access gateway of the first network and the central relay and between the access gateway of the second network and the central relay, the data connection being based on the IP protocol,
- establishing (S2) a first virtual private network tunnel (202) between the access gateway of the first network and the relay and establishing a second virtual private network tunnel (200) between the access gateway of the second network and the relay,
- logging transmitted signals by means of the relay,
- authenticating a user of the first network device using authentication data,
- transmitting (S3) a signal from a first network device of the first network, via the access gateway of the first network, through the first virtual private network tunnel to the central relay,
- routing (S4; 224) the signal inside the central relay from the first virtual private network tunnel to the second virtual private network tunnel,
- transmitting (S5) the signal from the relay through the second virtual private network tunnel, via the access gateway of the second network, to a second network device of the second network.

2. Method according to Claim 1, the routing of the signal being IP routing of the signal.

3. Method according to one of the preceding claims, the method also comprising the following steps of:
- checking the authorization of the first network device for communication with the relay,
- checking the authorization of the first network device for communication with the second network device,
- preventing the routing of the signal and the transmission of the signal to the second network device if the first network device is not authorized to communicate with the relay and/or the second network device.

4. Method according to one of the preceding claims, at least one of the two data connections from the first network to the relay and from the second network to the relay being established by means of the respective access gateway.

5. Method according to one of the preceding claims, the establishment of the first and second virtual private network tunnels being initiated by the respective access gateway.

6. Method according to one of the preceding claims, the establishment of the data connection from the second network to the central relay and the establishment of the second virtual private network tunnel being initiated by means of signalling via a data channel from the first network device of the first network to the second network device of the second network or by means of signalling via a data channel from the first access gateway to the second access gateway.

7. Method according to Claim 6, the signalling being a text message transmitted via a mobile radio connection or a telephone call.

8. Method according to one of the preceding claims, the routing taking place in a network layer.

9. Method according to one of the preceding claims, the method also comprising the following steps of:
- checking the authorization of the user for communication with the second network device using the authentication data, and
- setting up authorization of the first network device for communication with the second network device.

10. Relay (106) for an automation system, the relay comprising
- means (206) for communicating with an access gateway of the first network and with an access gateway of the second network, the communication being based on the IP protocol,
- means (212; 216; 214) for establishing a first virtual private network tunnel between the access gateway of a first network and the relay and for establishing the second virtual private network tunnel between the access gateway of the second network and the relay,
- means (212) for receiving a signal from a first network device in the first network, via the access gateway of the first network, through the first virtual private network tunnel,
- means (224) for routing the signal, and
- means (214) for transmitting the signal from the relay through the second virtual private network tunnel, via the access gateway of the second network, to a network device of the second network,
- means for logging (226) the transmitted signals,
- means for authenticating a user of the first network device using authentication data.

11. Relay according to Claim 10, the relay being designed to carry out a method according to one of Claims 1-9.

12. Automation system (100) having at least one first network (102) and one second network (104) and a relay (106) according to either of Claims 10 and 11, the first and second networks each comprising at least one network device and at least one access gateway (120; 122).

13. Automation system according to Claim 12, the automation system being designed to carry out a method according to one of Claims 1-9.

## Revendications

1. Procédé de communication dans un système (100) d'automatisation, le système d'automatisation comprenant au moins un premier ( 102 ) et un deuxième réseaux ( 104 ) et un relais ( 106 ) central, le premier et le deuxième réseaux comprenant respectivement au moins un appareil ( 110; 112; 114; 116; 118 ) de réseau et respectivement au moins un gateway ( 120; 122 ) d'accès au réseau respectif, le procédé comprenant les stades suivants :
- on produit ( S1 ) respectivement une liaison de données entre le gateway d'accès du premier réseau et le relais central et entre le gateway d'accès du deuxième réseau et le relais central, la liaison de données reposant sur le protocole IP,
- on produit ( S2 ) un premier Virtual Private Network Tunnels ( 202 ) entre le gateway d'accès du premier réseau et le relais et un deuxième Virtual Private Network Tunnels ( 200 ) entre le gateway d'accès du deuxième réseau et le relais,
- on enregistre par le relais des signaux transmis,
- on authentifie un utilisateur du premier appareil de réseau par des données d'identification,
- on transmet ( S3 ) un signal d'un premier appareil du premier réseau au relais central par le premier Virtual Private Network Tunnel en passant par le gateway d'accès du premier réseau,
- on achemine ( S4; 224 ) le signal dans le relais central du premier Virtual Private Network Tunnel au deuxième Virtual Private Network Tunnel,
- on transmet ( S5 ) le signal du relais à un deuxième appareil du deuxième réseau par le deuxième Virtual Private Network Tunnel en passant par le gateway d'accès du deuxième réseau.

2. Procédé suivant la revendication 1, dans lequel l'acheminement du signal est un acheminement IP du signal.

3. Procédé suivant l'une des revendications précédentes, dans lequel le procédé comprend en outre les stades suivants :
- on contrôle l'habilitation du premier appareil de réseau à communiquer avec le relais,
- on contrôle l'habilitation du premier appareil de réseau à communiquer avec le deuxième appareil de réseau,
- on empêche l'acheminement du signal et la transmission du signal au deuxième appareil de réseau, si le premier appareil de réseau n'est pas habilité à communiquer avec le relais et/ou avec le deuxième appareil de réseau.

4. Procédé suivant l'une des revendications précédentes, dans lequel la production d'au moins l'une des deux liaisons de données du premier réseau au relais et du deuxième réseau au relais s'effectue par le gateway d'accès respectif.

5. Procédé suivant l'une des revendications précédentes, dans lequel la production du premier et du deuxième Virtual Private Network Tunnels est déclenchée par le gateway d'accès respectif.

6. Procédé suivant l'une des revendications précédentes, dans lequel la production de la liaison de données du deuxième réseau au relais central et la production du deuxième Virtual Private Network Tunnels sont déclenchées par une signalisation passant par un canal de données du premier appareil du premier réseau au deuxième appareil du deuxième réseau ou par une signalisation passant par un canal de données du premier gateway d'accès au deuxième gateway d'accès.

7. Procédé suivant la revendication 6, dans lequel la signalisation est un message textuel ou un appel transmis par une liaison de téléphonie mobile.

8. Procédé suivant l'une des revendications précédentes, dans lequel l'acheminement a lieu dans une couche réseau.

9. Procédé suivant l'une des revendications précédentes, dans lequel le procédé comprend en outre les stades suivants :
- on contrôle l'habilitation de l'utilisateur à communiquer avec le deuxième appareil de réseau au moyen des données d'authentification, et
- on établit une habilitation du premier appareil de réseau à communiquer avec le deuxième appareil de réseau.

10. Relais ( 106 ) pour un système d'automatisation, dans lequel le relais comprend
- des moyens ( 206 ) de communication avec un gateway d'accès du premier réseau et avec un gateway d'accès du deuxième réseau, la communication reposant sur le protocole IP,
- des moyens ( 212; 216; 214 ) de production d'un premier Virtual Private Network Tunnels entre le gateway d'accès d'un premier réseau et le relais et du deuxième Virtual Private Network Tunnels entre le gateway d'accès du deuxième réseau et le relais,
- des moyens ( 212 ) de réception d'un signal par un premier appareil du premier réseau par l'intermédiaire du gateway d'accès du premier réseau en passant par le premier Virtual Private Network Tunnel,
- des moyens ( 224 ) d'acheminement du signal, et
- des moyens ( 214 ) de transmission du signal du relais à un appareil du deuxième réseau en passant par le gateway d'accès du deuxième réseau par l'intermédiaire du deuxième Virtual Private Network Tunnel,
- des moyens d'enregistrement ( 226 ) des signaux transmis,
- des moyens d'authentification d'un utilisateur du premier appareil de réseau par des données d'authentification.

11. Relais suivant la revendication 10, dans lequel le relais est constitué pour effectuer un procédé suivant l'une des revendications 1 à 9.

12. Système ( 100 ) d'automatisation ayant au moins un premier ( 102 ) et un deuxième réseau ( 104 ) et un relais ( 106 ) suivant l'une des revendications 10 ou 11, le premier et le deuxième réseaux comprenant respectivement au moins un appareil de réseau et respectivement au moins un gateway ( 120; 122 ) d'accès.

13. Système d'automatisation suivant la revendication 12, dans lequel le système d'automatisation est constitué pour effectuer un procédé suivant l'une des revendications 1 à 9.
